Europäisches Patentamt

European Patent Office

Office européen des brevets

(19)

(11) Publication number: **0 079 231**

**B1**

(12) **EUROPEAN PATENT SPECIFICATION**

(45) Date of publication of patent specification: **27.07.88**

(51) Int. Cl.⁴: **G 11 B 7/26, G 11 B 7/24**

(21) Application number: **82305938.1**

(22) Date of filing: **08.11.82**

(54) Optical recording method for archival digital data storage.

(30) Priority: **09.11.81 US 319463**

(43) Date of publication of application:
**18.05.83 Bulletin 83/20**

(45) Publication of the grant of the patent:
**27.07.88 Bulletin 88/30**

(84) Designated Contracting States:
**BE DE FR GB IT NL SE**

(56) References cited:
**EP-A-0 083 396**
**GB-A-2 079 031**

**APPLIED PHYSICS LETTERS, vol. 38, no. 11, 1st
June 1981, pages 920-921, New York, USA A.E.
BELL et al.: "Reversible optical recording in
trilayer structures"**
**CHEMICAL ABSTRACTS, vol. 73, 1970, page
394, no. 114995r, Columbus, Ohio, USA A.L.
HARRIS et al.: "Continuous-wave laser
recording on metallic thin film"**

(73) Proprietor: **UNISYS CORPORATION
Burroughs Place
Detroit Michigan 48232 (US)**

(72) Inventor: **Lee, Neville
3472 Avenue Ladera
Thousand Oaks California 91362 (US)**
Inventor: **Labudde, Edward V.
3401 Daniel Street
Newbury Park California 91320 (US)**
Inventor: **Chao, Shiuh
14010 Cerise Avenue
Hawthorne California 90250 (US)**
Inventor: **Labudde, Robert A.
821 Haileah Drive
Virginia Beach Virginia 23404 (US)**

(74) Representative: **Kirby, Harold Douglas Benson
et al
G. F. Redfern & Company
Marlborough Lodge 14 Farncombe Road
Worthing West Sussex BN11 2BT (GB)**

Courier Press, Leamington Spa, England.

## Description

### Cross reference to related specifications This Specification contains subject matter common to EP—A—79 229 and EP—A—79 741. EP—A—79 229 is concerned with an optical store including a gold film in which data is written without bulk melting, interruption or deformation of the film and EP—A—79 741 is concerned with a method of depositing gold on a substrate whilst monitoring the thickness of gold simultaneously deposited on a tri-layer structure.

The present invention relates to the method of writing data used in EP—A—79 229.

### Introduction, background

Optical storage of digital data is a relatively new technology, concerned with the storage and retrieval of digital information using optical techniques, using a special related (ODD, "optical digital data") medium, such as an ODD disk. By analogy such data is conventionally stored on magnetic media like tapes or disks commonly used with high speed digital computers today.

This disclosure relates to analogous optical media and associated read/write techniques and apparatus which are adapted to record and read-back the digital information using a focused beam of prescribed radiation energy, especially with low power laser equipment.

As workers well know, success in designing and operating such a system depends greatly on the storage medium. Workers in the art have, for some time now, pondered how to develop a satisfactory ODD disk medium, especially one adapted for low power lasers presently available and most practical. This invention teaches a practical ODD disk for this purpose, one adapted for reasonably long stable archival-life (e.g., on the order of 10 or more years) and use for record storage in high speed computer systems of today.

—Laser recording media, generally:

Now, requirements for such ODD media are stringent, e.g., involving high bit density and cost-effective information storage at satisfactory write/read rates; especially using low-powered lasers. (Workers recognize the simplicity and power of such laser implementation, where one need only modulate and deflect a laser beam for read/write operations). In related applications (e.g., video disk recording) workers have used lasers and, for certain aspects thereof, have suggested media using a metal film as an "information layer", this layer being softened, melted or vaporized (e.g., thermally-ablated) by a write-laser beam sufficient to form a "void" (a pit, hole, bubble, etc., or other deformation) in the layer as the "bit". Such a film may be coated on the surface of a rotating disk.

Many workers have felt that such laser recording is promising for computer records of various kinds; e.g., the mentioned ODD media. They have predicted that practical systems await media responsive to low-power laser writing and that in turn depends whether one can find such an information layer (material) able to be melted (or vaporized, etc.) at current practical low-power levels. This may also depend on the radiation efficiency of the associated system and on the thermal regime surrounding the layer (e.g., see Bartolini article cited elsewhere).

Thus, workers have looked for such laser recording materials which exhibit high thermal efficiency (a measure of how much of the heat generated at the recording site remains sufficiently localized to allow "pit" formation), and have long sought-out recording materials with a low melting point and low thermal diffusivity (tellurium, lead, bismuth and indium are examples).

And, since workers prefer to use low-power lasers for such recording (e.g., to enhance the operating life of a laser and minimize its cost and size), it has seemed even more desirable that the metal chosen for such an information (absorber) film have an "outstandingly-low" melting point ("adequately-high sensitivity") so that the desired "void" may be formed with minimal laser power.

—Te Absorber films:

Now, some workers have contemplated using Tellurium (Te) absorber films for this, or related, laser-recording for several reasons. Tellurium has an attractively-low melting point (about 450°C), conducts heat poorly and appears able to provide good sensitivity and S/N ratio; also, it is relatively convenient to deposit as a thin film. Bismuth is also commonly suggested for like reasons. And related alloys (e.g., as Te-Ge, Te-As-Se and Bi-Se) have been suggested as of interest.

Tellurium has a low write-threshold (energy)—when compared with Aluminum, for instance, as well as having a much lower thermal diffusivity—e.g., see U.S. 4,222,071 to *Bell*, et al; also see "Review of Optical Storage Media" by *Zech*, SPIE Vol. 177, Optical Information Storage, 1979, page 56, et sequ.; and also see "Optical Recording Media Review" by *Bartolini*, page 2 et sequ. of SPIE Vol. 123, "Optical Storage Materials and Methods", (1977).

For instance, this Bartolini article discusses such absorber films ("Ablative Thin Fils") along with ten other optical recording means—including "Photo-polymers", that is organic compounds known to undergo photochemical changes which involve a shift in refractive index. The Zech article discusses absorber films arranged and used so that laser-writing forms a "hole" in the absorbing layer, this information being detected according to difference in reflectivity (similarly for Bell patent).

For such known "deformational recording", it appears that the thermal energy delivered by a high intensity radiation beam "Write-Beam" of a Laser) is such that the "write-site" will soften, melt or ablate, in at least part of the beam cross-section. It is believed that surface tension then causes a "transverse cavitation" (see article by Zech cited above), leading in turn to the formation of a "pit" or hole, usually slightly elliptical. (See "Melting Holes in Metal Films for Real-Time, High Density Data Storage" by Cochran and Ferrier, SPIE Proceedings, August 1977, pages 17—31).

—absorber films:

As one feature hereof, we have discovered a related kind of laser-recording can be done at temperatures well-below the melting point of such an "absorber". And, as a result we have also discovered that materials like gold, having a relatively high melting point and rather good conductivity—characteristics heretofore shunned by workers for the instant purposes—can yield a surprisingly good absorber film; one comparable in sensitivity to a "hitherto-preferred" absorber like Tellurium.

Of course, some have vaguely speculated that "high melting point" materials like Titanium and Gold (also platinum, rhodium, nickel, chromium, manganese and vanadium—e.g., cf. U.S. 4,285,056 to Bell) might be suitable for such "deformation" absorber layers. However, such speculations have paid no heed to the practical problem of "sensitivity" or to how a lower power laser can record on them as mentioned above. Or they have ignored the associated problem of high conductivity (where heat is readily conducted away from the recording site it is wasted, further degrading sensitivity—note a metal like gold has a high conductivity, whereas Ti and Te do not).

More astute observers have acknowledged that such "high-melting-point" metals are quite unlikely as absorber candidates (e.g., as expressed in cited U.S. 4,222,071 where the "low-melting-point" and poor conductivity of Te was heartily endorsed as yielding superior sensitivity and enabling one to record with a low-power laser. Thus, metals such as Au which are the REVERSE; i.e., good heat conductors and high melting point should, in theory, be the worst "absorbers"). Yet, the present invention teaches that just such metals as gold can be used and be superior to known absorbers—e.g., having a sensitivity somewhat equivalent to Te and much superior archival life.

This invention, further, teaches that such absorber films—contrary to everything taught in the art—evidently need form no holes or be otherwise deformed in the course of recording.

—Extended archival life:

A major advantage of optical data storage technology is the increased storage capacity it affords; e.g., the order of 100× that of magnetic tape. An optical data disk as here contemplated will be assumed as "non-erasable", with information stored permanently thereon for an extended archival life on the order of 10—15 years or more. Such extended life is a goal yet to be reached in the art, though workers would dearly love to do so. The present invention promises media exhibiting this archival life, being especially adapted for optical mass memory and like applications.

By contrast, commonly-suggested absorber metals like Bismuth and Tellurium are known to slowly oxidize and otherwise degrade much too readily in the typical user environment; hence, they are poor candidates for such archival records (e.g., see cited article by Ash et al. 1981; and Zech article; also demonstrated by Example I below). Workers generally realize that Tellurium has particularly poor archival stability—i.e., its read-out quickly degrades with time. This degradation is accelerated in a high humidity environment; and is typically characterized by a rapid increase in overall optical transmission, presumably caused by a general oxidation of the metal, as well as by severe attack on selected bit sites, beginning at "defect sites" in the metal film. And Bismuth is similar.

This archival feature is addressed by this invention which teaches the analogous use of related films of gold, etc—materials which are quite archival and are stable for extended use as computer information storage media, especially as for such optical data disk records for (as in Table I) computers.

Thus, as a feature of novel application, we contemplate the use of such materials for records exhibiting the desired archival life, i.e., being extremely resistant to oxidation or like environmental degradation, during the contemplated use. Thus, no "loss" of recorded information will occur over extended (storage) life—i.e. reflectivity remains stable enough to "read". No practical storage medium or associated system is yet available which can provide extended archival life; especially where high sensitivity is also required (e.g., the sensitivity of Te or better). The invention teaches just this step forward.

United States Patent 4,285,056 discloses a method of recording optical data pits in an optical data storage medium by means of an incident laser beam. The disk or other optical medium comprises a tri-layer structure having a transparent spacer layer underlying a metal absorber layer which may include gold. The melting, or decomposition or sublimation temperature of the material of the spacer layer is considerably below the melting point of the gold absorber layer. The laser light heats the gold absorber layer which in turn causes decomposition, melting or sublimation of the adjacent spacer layer for the optical tri-layer to become distorted de-tuned and thus reflective by virtue of either bubble formation or pit formation in the overall structure. By contrast, the present invention seeks to provide improvement thereover by providing an optical disk data store using a disk with a tri-layer structure having a thin gold absorber layer whose reflectivity can be altered without interruption or deformation of the film and where the function of the tri-layer is changed rather by change in the reflectivity of the gold absorber layer film rather than by physical disruption and de-tuning of the tri-layer structure.

In an article by Bartolini & Bell in I.E.E.E. Journal of Quantum Electronics, Vol. QE-17, No. 1, of January 1981 entitled "Diode Laser Optical Recording Using Tri-Layer Structures" on Pages 69—77 thereof, there is disclosed the reflective tri-layer structure well known in the art of optical disk recording wherein disruption to a tellurium absorber layer causes de-tuning of a tri-layer structure to render a portion of the tri-layer structure reflective by loss of it dark-mirror property. By contrast the present application seeks to provide an optical disk data store having a tri-layer optical disk written by a laser beam where the reflectivity of a metal layer is simply altered without necessity for disruptive or destructive ablation or vapourization of a metal reflector layer in a tuned tri-layer structure. The present invention further seeks to provide improvement thereover by arranging that the reflectivity of the tri-layer structure is altered upon incidence of a low energy laser beam simply by alteration in the reflectivity of a gold absorber layer without any interruption or deformation of the underlying spacer layer.

The novel recording media taught herein will be generally assumed as meeting the foregoing criteria; and, where possible, as also meeting one or more of the "Target performance criteria" presented in Table I below. (See also "Optical Properties of Tellurium Films Used for Data Recording" by Ash and Allen, SPIE, Vol. 222, 1980).

Table I (Target Media Criteria)

1. "High" Sensitivity:
—allow recording with low-power laser means. "Sensitivity" will be understood as minimum laser power needed for bit formation (change in spot reflectivity, akin to that resulting from formation of a hole, or other void or like change in medium, giving adequate read-out at contemplated recording rate).
With the invention, one may typically "write" with the order of 5—15 mW laser power for approximately 40—60 n.sec;
—yet not degraded by read-out (e.g., on repeated playback).

1-A. High S/N: (adequate read-out)
Signal to noise ratio (for adequate read-out) on the order of about 30—40 dB or more.

2. "Archival Stability": (10+years life):
Able to be used or stored in "normal computer environment" without dropping below min. read-out for at least 10—15 years.

3. "Computer records":
Assume capability to operate with present day high speed digital computers—e.g., with at least the same capabilities as today's magnetic disk storage equipment (e.g., bit density of about $10^6$ bits/cm$^2$ or better).

4. "Depositable":
—suitable film(s) can be deposited on "commercial scale" and give repeatable, controlled characteristics.

5. Overcoat-ability:
absorber film (e.g., up to a few mils thick) can be coated to mechanically protect it and defocus "surface dirt" without sacrificing above features, e.g., still give adequate read-out (preferably overcoat can also impede heat and contaminant-gases, etc. from absorber film).

Thus it is an object hereof to provide the foregoing, and other related, features and advantages. A more particular object is to do so teaching gold as such absorber (information) films. Another object is to teach such films exhibiting good sensitivity, even with low-power lasers; as well as extended archival life. A further object is to teach formation of such records apt for recording without need to generate "pits" or like voids in the information layer. Another related object is to so without need to melt or significantly soften the information layer; i.e., developing "altered reflectivity" bits (pseudo-holes) while keeping the layer well below its melting point.

The present invention consists in a method for writing data bits onto an optical data storage medium including use of a modulated write laser beam focused onto a gold absorber layer in said medium to alter the optical reflectivity to light of a predetermined wavelength of said medium at selected positions thereon whereat it is desired to write a data bit by provision of light from said write laser beam with a predetermined intensity and for a predetermined time at each of said positions on said medium whereat it is desired to write a data bit; said method being characterized by said predetermined intensity and said predetermined duration being selected for said beam, during writing of said each bit, never to melt said gold but nevertheless to be operative to alter the reflectivity of said gold layer at said each bit without interruption or deformation of said gold layer.

Brief description of the drawings

These and other features and advantages of the present invention will be appreciated by workers as they become better understood by reference to the following detailed description of the present preferred embodiments, these being considered in conjunction with the accompanying drawings, wherein like reference symbols denote like elements:

Fig. 1 provides a cross-sectional view of an idealized portion of a prior art recording medium;

Fig. 2 provides a similar view of a novel preferred recording medium embodiment exhibiting a construction in accordance with the principles of the present invention;

Fig. 3 is a plot of absorber reflectivity vs. gross temperature;

Fig. 4 is a view, similar to that of figure 2, of a preferred disk record embodiment; and

Figs. 5 to 7 schematically indicate a record embodiment in a preferred application.

Detailed Description of the Invention

"Te Example"; Tellurium absorber; (prior art):

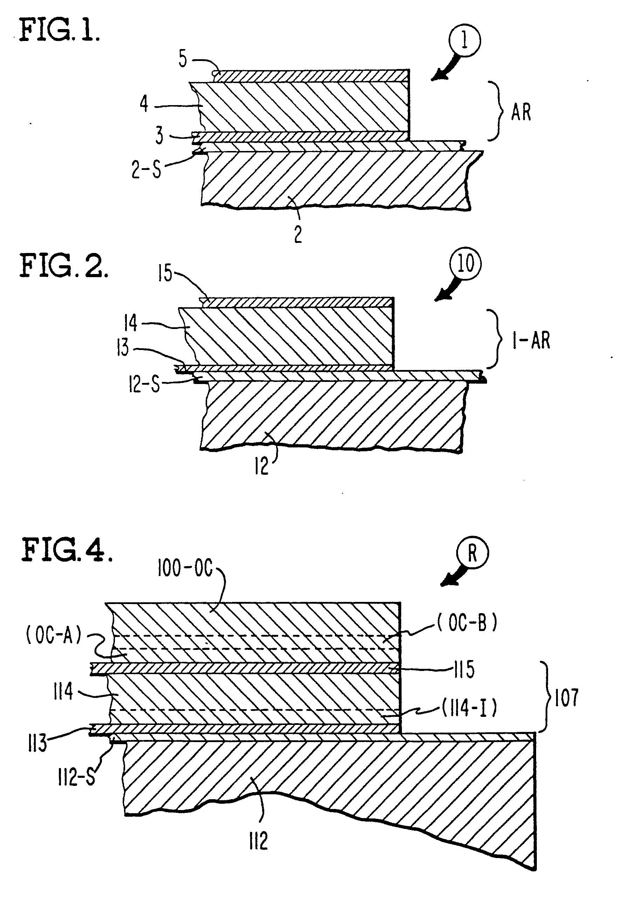

Fig. 1 is a schematic illustration of an idealized cross-sectional view of an optical recording medium 1, generally along the lines of what is presently taught in the literature for Tellurium (e.g., see Ash article). Medium 1 comprises a support 2 on which is provided an "anti-reflective" substrate AR and, on AR, an information layer ("absorber") 5.

Preferably substrate AR comprises a "reflector" layer 3, on which a transmissive "spacer" layer 4 is laid. Layers 3 and 4 may be characterized as, respectively, primarily-reflective-, transmissive at the contemplated read/write wavelength. Layers 3, 4, 5 will be understood as providing a multilayer low-reflecting (anti-reflection) design over most of the visual spectrum as known in the art (see Ash article).

Support 2 preferably comprises a polished aluminum disk of the type presently used in digital magnetic recording for computer disk drives, coated with a subbing layer 2-S adapted to render a satisfactorily-smooth, flat surface for deposition of reflector layer 3. A radiation (laser) beam of prescribed energy and wavelength may be understood as applied to medium 1 from a laser source L, so as to establish a "hole" or like "deformation" on layer 5 as "writing" takes place, e.g., at site "v" shown in phantom.

Prior art record 1 in Fig. 1 will be understood as undertaken and described principally to provide a means of comparison and distinction for the invention embodiments in the following examples. And, except as otherwise specified, all materials, methods and devices and apparatus herein will be understood as implemented by known expedients according to present good practice.

Here, the metallic recording film 5 will be understood as deposited on the "transparent" dielectric spacer 4, with both thicknesses selected to yield a known low-reflectivity structure (e.g., as in Bartolini article, where less than 3% reflectivity with 5 nm Ti on 80 nm $SiO_2$ spacer recording at =488 nm). Then, where each "pit" (bit) is recorded, this "anti-reflective" background will be disrupted such as to yield "bits" adapted for high-contrast read-back. And where the recording wavelength is shifted, the spacer thickness is readily altered to give like results.

Workers will recognize that in certain cases the reflector film may be eliminated (e.g., in favor of a "dielectric mirror") and that spacer 4 may comprise other materials/structures (e.g., several layers of like material that is also more insulative thermally).

Thus the coating parameters here will be understood as selected to preferably provide an "anti-reflective" condition for the so-coated disk at the contemplated recording frequency when the write beam is focused on this absorber layer. [Regarding such see: *"Anti-Reflection Structures for Optical Recording"* by Bell and Spong, Journal of Quantum Electronics, Vol. QE 14, No. 7, July 1978; and for general prior art, see exemplary articles: "Optical Disk Systems Emerged", IEEE Spectrum by Bartolini, et al, August 1978, page 20; and Optical Recording Media Review" by Bartolini, SPIE Proceedings, Vol. 123, 1977, ("Optical Storage Materials and Methods", page 2).

Preferably, deposition proceeds until the reflectance of layer 5 reaches "effective zero" or another predetermined minimum-reflectance level. As workers know, this may be done empirically, or by continually monitoring the flectance of the absorber film as 5 is deposited [and see deposition techniques described by Zech in his cited article].

Thus, one may vapor deposit an opaque layer 3 of aluminum onto 1c Support 2 (all optical characteristics taken relative to contemplated R/W laser spectrum of 400—900 nm). Then, a layer 4 of $SiO_2$ (or like "transparent" dielectric) is vapor-deposited on layer 5 to a prescribed depth, this depth related to $\lambda_o$, the operating wavelength (—here, preferably slightly less than $1/4\ \lambda_o$ or $3/4\ \lambda_o$). Atop layer 4 is vapor deposited the absorber film 5 to a depth which produces the initial minimum (near-zero) reflectance (see below).

The reflectivity of the record medium 1 will be understood as modified at each bit-site "v" by the radiation beam from write-laser L, so that, upon detection with a suitable means, the "void areas" v (i.e., "bits") may be distinguished as relatively "high reflectance spots" from the low reflectance "non-void" surrounding them, as known in the art.

For instance, U.S. 4,285,056 to Bell describes a like medium where information is recorded as openings in both the absorber and transmissive spacer layers, with the lengths of the openings and of the unexposed intervening areas being varied along a specific information track to convey frequency information. This patent also calls-out various materials (e.g., among them titanium, rhodium, platinum, gold, nickel, chromium, manganese and vanadium) to be deposited uscng standard evaporation or electron beam evaporation techniques.

However, Bell diverges from what is contemplated here in requiring that his spacer layer be heated by the write beam—heated sufficient to either be itself ablated-away, (i.e., to otherwise develop a void within itself) or else to be decomposed or sublimed and then out-gas sufficient to cause a "bubble" under a super-layer (e.g., of gold)—yet in the present case, essentially no energy is to be absorbed by the analogous spacer layer.

—Preparation of absorber layer 5; (Fig. 1:

Absorber layer 5 preferably comprises a relatively thin layer of Tellurium which is vapor deposited onto spacer layer 4 (on a relatively flat—~$\leq$1/20 $\lambda$—record-surface thereof), preferably to a depth determined by monitoring this "tri-layer coating" to yield the "initial minimum reflectance", (typically, one to several tens nm). The Te was so evaporated in a high vacuum chamber using a refractory metal boat for a source [1.2 m box type coating chamber used in Ash article]. Tellurium is a "low melting point/ poor conductivity " metal commonly preferred by workers because it is felt to exhibit superior sensitivity, thus minimizing required (threshold) laser write-power.

For instance, this is expressed in U.S. 4,222,071 to Bell and Bartolini, where similar tellurium films were characterized as requiring laser-power on the order of 15+ mW for writing thereon (to achieve adequate read-out, about 20% optical efficiency being assumed—the goal being to permit recovery of recorded video signals with about 45—50 dB S/N, or "broadcast quality" read-back).

[They also specified a solid state Ga-AL-As injection ... laser, apparently applied in a continous beam one (1) micron in diameter at the record surface, the while kept moving past this beam].

U.S. 4,222,071 stresses that the absorber must be a "low melting point metal" like Te (as well as being deposited in a "continuous film", and not as "microscopic agglomerates").

Substrate 2 comprises a flat, aluminum plate polished to desirable flatness and coated with subbing 2-S to accommodate deposition of thin reflector layer 3 (high reflectivity over at least the "working portion" of the contemplated radiation spectrum). About 60—90 nm of aluminum vapor deposited has been found satisfactory.

The spacer 4 is likewise deposited atop reflector 3. Spacer 4 is a dielectric material which is relatively transparent to the "working portion" of the laser spectrum and preferably also exhibits good thermal properties (e.g., good insulator, low thermal capacitance). About 110 nm of vapor-deposited $SiO_2$ (silicon dioxide) has been found satisfactory for the subject purposes (e.g., write/ read at $\lambda$=633 nm). The Tellurium absorber layer 5 will be understood as highly absorptive of the contemplated recording laser spectrum (e.g., typically 25% absorptive; 30% reflective, with about 45% of the beam energy transmitted (for tri-layer cancellation, must transmit more than reflect).

The thickness of absorptive layer 5 depends on that of spacer 4 and should be minimal, only that sufficient to render the "Dark Mirror effect" known to workers—being deposited on its antireflectance substrate, only until reflectance is first minimized.

Workers would view the Te absorber 5, with its low melting point and a relatively short thermal diffusion length (poor conductivity—thus helping concerve incident laser energy) as a good, high-sensitivity material. When a write beam from laser source L falls upon site "v" of layer 5, a small portion of its energy will be reflected, a small portion absorbed and a large portion transmitted—the transmitted portion being reflected back by layer 3 to be (principally) absorbed in layer 5. Hence both incident and reflected energy will heat film 5, minimizing transmission losses (deposition of 5 to yield "tri-layer").

—Results:

For instant purposes, "Sensitivity" will be understood as: characterizing the write-energy $E_w$ necessary to change reflectivity (or a like read-out charcteristic) sufficient to gie the desired minimum read-out.

The intensity and time exposure of the focused Write-Beam will be understood as sufficient to so elevate the temperature of absorber layer 5 as to cause the indicated change in reflectivity (at v sites) giving the desired read-out quality, etc. (e.g., so that adequate contrast, S/N ratio) may be realized, as understood by workers in the art.—cf. an exemplary S/N ratio of 40—50 dB (peak-to-peak signal vs. RMS noise) for a bandwidth of about 15 MHz.

Here, test recording is performed with a gas (1—10 mW He-Ne) laser beam operating at 633 nm, with recording exposure from 30—470 n. sec., (usually 10 mW, 40 n. sec. or about 400 pJ—this intended to yield minimum adequate read-out, or about 40+dB S/N, when read at lower power; e.g., viz: 150—500 $pJ/cm^2$, $pJ=10^{-12}$ watt-sec. or Joules). With the same or similar laser equipment. Note: for this contemplated setup, assume laser focused bit site ~$\frac{1}{2}$—1 micron diameter, need for write-pulse about 40 n. sec. long [60 n. sec. from rise to fall—this also accommodating disk rpm ~1800 and galvo-mirror focus characteristics].

The subject record 1 is so-recorded upon. It is found (relating to comparable situations in the literature, etc.) that relatively low-power laser pulses can melt the Te film sufficient to yield the well-known "craters" or "holes" and give good read-out (e.g., bit reflectance of ~50% vs. background of 1—3% et $\lambda$=633 nm)—however with quite a bit of "noise" too.

Such "bit holes" will be seen to be actual voids (.e., see photos in Ash article where 2—10 mW, 100 n. sec. laser pulse recorded such "holes" in like Te films—there, it was assumed that a 25 nm film of Te used in the reflective mode produced 57% reflectance, 6% transmittance, 37% absorptance at 450 nm). However, despite the fact that such Te films are deposited as a continuous layer, the formation of the "bit holes" (v) is described in the literature as accompanied by a surrounding rim—and it is thought that this rim is responsible for (much of the mentioned "noise".

Evidently one needs a certain MIN. Write-Energy $E_w$ within a certain minimum rise-time (e.g., with this laser, etc. about 10 mW within 40 n. sec. to render adequate "holes" (.e.g., higher power delivered too slowly can allow heat-at absorber to leak away; thus no "bit" is written).

Such "holes" or "pits" are indicated by the hole at "v" in Fig. 1. At least some of the absorber material 5 is then evidently softened and displaced at that bit-site, sufficient to reduce its thickness there and so give increased reflectivity (at least that is what the art conventionally teaches, e.g., see Ash article and cited U.S. 4,222,071).

Such a spot may be read-out with means known in the art, e.g., with a similar laser at low power (e.g., above described laser at 3 mW), the increase in reflected energy received (at a suitable photo-detector) is observed to yield on output signal representing the recorded bits, these being readily distinguishable from background—this read-energy being insufficient to "erase" or disturb the so-recorded bits, of course. [Note: read-out at a frequency $f_R$, where "pit-depth" introduces a phase change vs. light reflected at surface of Te such as to maximize contrast therewith].

—Archival stability:

We found that the archival stability of this "Te record: was extremely poor, as the literature has noted (e.g., see Ash article re-oxidation, etc.). For instance, under known temperature-humidity cycling, record 1 will be found (using no overcoat on layer 5) to lose 50% of its reflectivity in about 50 weeks, evidently mostly via oxidation, etc. The Te film of Example I will be found characterized by a rapid increase in overall optical transmission after such "aging". This is presumably caused by a general oxidation of the metal as well as severe selected site-attack beginning at "defect sites": in the metal film. (cf. analogous test per MIL SPEC #810-B).

This is grossly inadequate for the mentioned "archival memory" requirements (at least 10—15 years exposure to normal computer operating/ storage conditions; see Table I).

Embodiment examples

The following Examples are given by way of teaching some exemplary uses and advantages of "low temperature" absorbers according to the invention. Advantages and features thereof will be better appreciated by comparing them with the "Te Example" described above.

—Example I; Au absorber; (Fig. 2):

The operations, materials, method and structure of the "Te Example" (Fig. 1) described above are essentially duplicated here, in a "gold record" 10, except as otherwise specified.

Record 10 will be understood as comprising a substrate-support 12 on which an "anti-reflective" substrate 1-AR is laid (preferably comprising a reflector layer 13, with a transmissive space layer 14 laid upon 13) with an absorber film 15 placed atop substrate 1-AR (spacer 14 thereof). Here, absorber 15 comprises a film of gold deposited like the Te film in the "Te Example" to a similar depth by essentially similar means. The underlying spacer layer 14, reflector layer 14 and substrate 12 are (at least functionally) otherwise the same as in "Te Example" and will be understood as also functioning as a "tri-layer".

That is, this gold absorber film 15 is preferably formed (as in "Te Example") by vapor depositing gold on the surface of $SiO_2$ spacer 4 until the well known "tri-layer" is rendered (i.e., until surface-reflectivity of 5 first goes to zero or "near zero").

—Results:

The results are most surprising, especially in light of expected properties and as compared with conventional media like the Te absorber described in "Te Example". That is, record 10 was recorded-upon, read-out and evaluated, with its sensitivity, etc., measured, as in the "Te Example"—i.e., using an He—Ne laser system of the type mentioned. The so-written bit-sites exhibited a like increase in reflectance and higher output signal as with Te. As detailed below, one finds this yields a record with fine archival stability, unexpectedly-high sensitivity, high S/N and surprisingly low write-energy, and low write-temperature—plus overcoat tolerance; yet one observes only "reflectance transitions" with no "pits" or like deformation of the absorber.

—"Archival stability" (resistance to environmental degradation): was found to be far superior to that of the Tellurium record in the "Te Example" (and to that of any known tellurium "pit" records); for instance measurements of change in optical reflectivity after "aging" (under a cycled elevated temperature/high humidity environment) indicate that this alloy is considerably more stable then closely-similar Tellurium films. And workers are well aware that gold is equal to such "archival" conditions as required here. It is projected that such "gold records" can maintain adequate read-out (30+dB) for the order of ten (10) years or more of the contemplated storage and use.

—Unexpected "high sensitivity":

We found to our great surprise that such a thin gold alloy absorber can be approximately as "sensitive" as a Tellurium absorber (e.g., about 1/2 that of "Te Example" is common)—e.g., that information can be recorded in the 5—15 mW, 10—100 n. sec. power range (or 100—1000 p.J.)—specifically about 5 mW for as little as 40 n. sec. is seen to "switch reflectivity"; some samples even "switch" in about 10—15 n sec. at 1—2 mW; others in less time at 10 mW—all yielding satisfactory read-out (e.g., 30—40 dB S/ N, etc.). This is really astonishing—it is many times the value our theory predicted and is really contra to what the literature conventionally teaches!

That is, compared with known accepted "good absorbers" like Te, gold has such a relatively high melting point (about 1100—1200°C vs. about 450°C for Te) and such superior heat conductivity (that of Te is notoriously poor), that one would have to expect a gold absorber to exhibit sensitivity far inferior to that of Tellurium. For instance, the literature extols Te as having sensitivity which is vastly superior to Titanium, and Titanium has a high melting point like gold but is as poor a heat conductor as Te—thus how can gold be a better absorber than Titanium?? One reason (see below) may involve the very different mechanism for such "bit formation", i.e., whereby, unlike Te, etc., no deformation (e.g., pit, bubble, etc. formation) is involved here; but rather something else serving to change reflectivity when subjected to such a write-beam, and evidently requiring considerably less write-energy.

—Low temperature recording:

A major surprise is that the indicated "reflectance transition" occurs at such low (write-)power levels and evidently at such low temperatures [see below, Examples show that this occurs well-below golds melting point]. Thus surprisingly high sensitivity, in turn, allows one to turn to "high-melt" material like gold which has superior archival properties, alleviating risk of corrosion, degradation over extended life.

—Writing "transitions" without "deformation" of absorbers:

An even greater surprise ensued when the so-written record (with low power, low T°) was examined for the usual "pits" ("holes" or like deformation as with Te films). After careful investigation (e.g., with scanning electron microscope), no evidence of "pits" could be found!—and results were found that were unexplainable by pit formation! This was bizarre and most unexpected; all known absorber films of this type, when so written-upon (i.e., suitable laser energy, sufficient to yield significant read-out reflectance differences, as here), have definitely exhibited "pits" (i.e., displacement of absorber material at bit-site)—as workers well know. Example I is a case in point.

This is so unorthodox that many of our coworkers refused to believe it for sometime. But to date, having found no convincing evidence of "pits" (a negative fact to be sure—subject to possible explanation later), we must believe that there were none. It is possible, of course, —indeed likely—that greatly increased write power will generate such a hole or pit. And, one cannot be sure that present "deforming materials" like Te will not reset similarly under the "right" conditions.

Our best theory (as yet not fully worked out) is that, without forming any such "pits", this thin (pure gold) absorber film is so deposited (e.g., on tri-layer) as to be capable of being radically changed somehow by the usual write-beam so as to exhibit a significant difference in reflectance (vs. background), —almost exactly as other known absorbers like Te have done in the course of forming "pits". We characterized this as "reflectance transition" for lack of a better term.

We are not yet sure of the causal mechanism—e.g., whether it results from some solely-internal change in phase, or in crystallinity, in density, etc. (perhaps akin to the photo-polymers in Bartolini article cited above), or whether one or several interior micro-sites are so formed.

This strange absence of "deformations" and apparent lack of melting, coupled with the unexpectedly low write-energy ($E_w$), leads us to infer that the so-written "reflectance transitions" occur because of internal, relatively microscopic changes in the gold film—as opposed to the conventional "macroscopic" changes like pit forming (and one can infer that the latter reasonably should require more write-energy). We theorize that such transitions are peculiar to "ultra-thin" films of this type (on the order of 100 to several hundred A°±50%). One could further surmise that such films exhibit special properties unrelated to those of the "bulk metal"—properties attributable (in part at least) perhaps to the relative prominence of metal substrate bonds (e.g., Au-SiO$_2$ bonds vs. Au-Au bonds). And we expect that for thicker films (more like "bulk metal") more write-energy would be required—if indeed such "transitions" are possible (e.g., Au-Au bonds predominate and are stronger).

In any event, workers will certainly welcome the availability of such novel gold absorbers, not only because of their evident ease of manufacture (deposition, handling) by well-known methods and properties, and their evident superior archival stability and aptness for use in computer disk records (e.g., per Table I), but also because writing such "transitions" implies special unique advantages—e.g., dispensing with need to melt absorber, or to "roll aside" absorber mass to form a "pit", absence of typical "pit-rim" giving rise to "read-out noise", and associated unconcern with constrictive effects of over-coatings (e.g., a protective film covering the ordinary pit-forming Te absorber will be expected to "squeeze" the pit site sufficient to retard pit-formation); also, the association reduction in write-energy and record temperature—all these promising the ability to "laser-write" with much less energy and to write smaller bits! Workers will welcome a system whereby bits may be recorded without the intense heat and macroscopic changes inherent in the well-known pit formation.

—Overcoating; effects:

The "Te Example" was also run with a thin overcoating of SiO (100 nm, vapor deposited) on the Te film. This was not really a true, functional overcoat of the kind workers have suggested (e.g. several mils thick, to permit record handling, without scratching to "defocus" surface dust, grime, etc.; to impede vapor entry, e.g., water, oxygen; to further conserve writing heat, etc.); but did effect "pit formation", raising required write energy to about double! (Possibly because it so "squeezed" Te film at pit-site as to impede associated displacement of Te material there). And workers are aware that such "deformation media" (as with pits in Te, bubbles in other metals, etc.) cannot tolerance such an "overcoat" (e.g., read-out signal destroyed; sensitivity raised).

Significantly, when an Au film is in Example I was similarly over-ocated, no such effect was seen (e.g., same write-energy to generate "pseudo-pits"). As workers will see this reinforces the theory that the instant "transition" mechanism is quite novel (no movement of Au metal to form "pit", etc.) and amplifies the attractiveness of such absorbers (tolerance to overcoating is very, very important). Evidently the involved "reflectance transition" is more toleramt of the usual overcoat. For instance, coating such a pure gold tri-layer with several mils of transparent Teflon doesn't radically disturb its record properties (e.g., sensitivity, read-out drop only a bit—vs. with Te, cannot record at all, at this power level). This compatibility of gold absorbers with such elastomeric insulative over-coatings is a very welcome feature. To our knowledge, this is the first such absorber that accepts such overcoatings while maintaining good record properties (sensitivity, S/N, archival, etc.).

As another feature hereof, and based on the foregoing and other Examples, one would infer that such an ultra-thin absorber film (of gold) is probably not behaving as predicted from reported "Bulk" (Gold) properties (e.g., thermal conductivity—e.g., radial conductivity cannot be significant). The discovery of such "thin film properties" is significant and is further mentioned below.

By way of showing that these "transition bits" (reflectivity-switching) occur well-below the melting temperature (of gold) and involve no "pits" or other deformation, Examples II-V follow.

—Example II; Gross heating:

The record of Example I is essentially replicated with pure gold deposited on the same tri-layer to same depth as Example I. However, rather than subjecting it to a laser write beam, the record is simply heated, rather crudely, at several spots with a common soldering iron. The spots are heated to a "transition temperature" (−range, considerably below the melting point or the softening point) where a radical change in color is observed (extreme change in gross "eyeball-reflectance" occurs rather suddenly).

That is, we slightly heated spots on this "pure gold" absorber sample, with the solder iron heated to about 550°C (estimate is maximum T° of iron, and is well below gold's melt point of 1100—1200°C)—and we found to our surprise that the "eyeball appearance" of each so-heated spot changed very radically (from a relatively low-reflectivity dark blue, to a high reflectivity "white"—pale violet). Again, examination failed to find any evidence of "pits".

—Example III; as II, but Au/Pb:

Example II is repeated, however with a gold-lead alloy replacing the pure Au. The results are essentially the same except that they occurred a bit faster (at lower T° as sample warmed-up). This strongly suggests that various gold alloys can be made to yield these inventive results (high-sensitivity; "write" with very low power and well below melt point, etc.).

Another like sample (Au/Pb) is made and is written, then read-out as in Example I. Results were much the same as Ex. I (pure Au) except that sensitivity was a bit higher (higher than in "Te Ex." too!).

—Example III-A: I; but Au/Sn:

Ex. I is replicated, however, substituting an Au/Sn alloy for the pure gold absorber film. Results were quite similar to Ex. II, with a minor drop in sensitivity.

The "alloys" in Ex. III and Ex. III-A are, really separate Au, Pb or Sn layers vapor-deposited (as in Ex. I) individually and sequentially [e.g., Au, then Pb, then Au, then Pb, then Au to a total depth giving "initial zero reflectance" as in Ex. I]. Thus, they are better characterized as "laminate-mixtures".

—Example IV; Au, on glass only; torch-heating:

Example I is repeated except that, instead of a "tri-layer" substrate, only a glass sheet is used. The same deposition is carried out, with the Au film vapor-deposited to the same "tri-layer depth" (e.g., in common chamber with a second tri-layer sample, keeping deposition time the same for both samples, while vonitoring tri-layer reflectance as in Ex. I).

Results were closely similar (color change at estimated 450°C, with radical change in reflectivity occurring; however heating was with a "blow torch".

The temperatures in Examples II, III and IV were estimated, not precisely tracked. This was remedied in the Example V below.

—Example V: as I, oven heating, T° monitored:

Example I is replicated (pure Au on tri-layer). However, the sample is heated in an oven (not laser written) and its temperatur carefully monitored (with thermocouple) along with its reflectance (5 mW He-Ne laser at 633 nm and associated detector and read-out means).

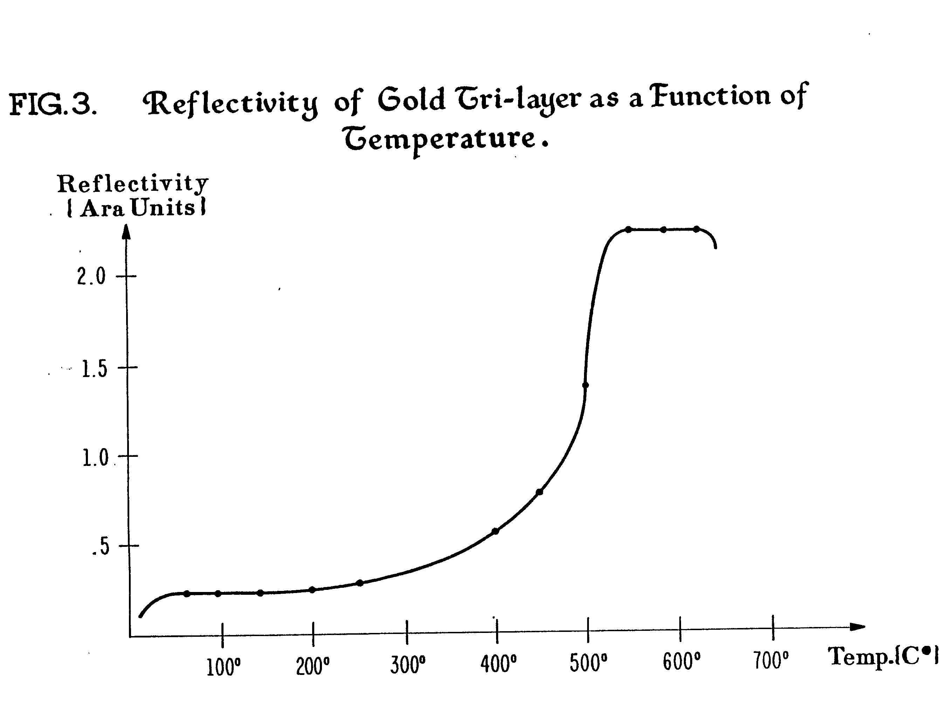

Fig. 3 is a resultant plot of oven/record temperature vs. reflectivity (reflectance scale arbitrarily chosen—#0.5 corresponds to ~5% refl.; #20 to ~90% reflectance). This plot confirms that such "mild heating", kept well below gold melt T°, will, of itself, induce a radical change in reflectance; cf gradual change from about 200—400°C; then sharply from 400—550°C; (here, entire sample surface is heated—no melting observed).

Workers will agree that the gross macroscopic color transitions observed in Ex.s II-V above, under such "mild" (non-melting) heating certainly confirms that such "reflectance transitions" in a gold film have nothing to do with forming "pits" or any other deformation.

This is exciting on several counts—e.g., promising "low-T writing" (low $E_w$), elimination of read-out noise associated with the ridges that usually form around such "pits", higher bit density, ability to "so-write" on noble and like "archival metals with a relatively high melting point.

—Example VI—as I, but elastomer substrate:

Example I is replicated except that a glass slide is substituted for disk 12 and a transparent Teflon coating is substituted for $SiO_2$ spacer 14. The same kind of vapor deposition is undertaken. e.g., Al film 13 on glass slide until monitored reflectance is maximized, then Teflon to "spacer-thickness" as before, then pure Au deposited until "first minimum reflectance" (of companion tri-layer sample).

—Results: Results are similar to those of Ex. I only better, for instance, exhibiting about 4× sensitivity. And adequate "transitions" (for read-out) can be written with the same He-Ne laser at power as low as about 1—1.5 mW (40 n. "threshold level"). As before, no evidence of "pits" etc., is seen (e.g., with scanning electron microscope). Also, adhesion of the gold was also superior (vs. $SiO_2$).

Evidently the elastomeric spacer (Teflon) greatly improves writing efficiency, keeping write-beam heat localized at the "bit site".

—Example VII:—as VI, elastomeric overcoat:

Ex. VI is replicated except that an overcoat of 200 nm transparent Teflon is applied on the gold absorber film.

—Results: Results are almost as good as in Ex. VI; with some drop in sensitivity. It is even possible to write "transitions" at laser power as low as 0.1 mW if 30 sec. exposure (approximately) can be tolerated.

This result would be very unexpected if the bits were written according to prior art mechanisms (e.g., forming "pits"). That is, conventionally, one expects such an overcoat to radically degrade sensitivity (require more write-energy). For instance, as mentioned above, an overcoat on a Te film as in "Te Ex." prevents writing entirely (with reasonable power levels, like the described 10 mW). Workers have surmised that the apparent spot increase in needed write-energy (for "pit forming") stems from the overcoat "squeezing down" on the absorber, resisting translation of its mass as a "pit" begins to form.

Thus, the instant results are not only surprising and advantageous but tend to confirm that the involved novel "transition" mechanism (and related "transitional absorber" material like Au) is quite unrelated to forming pits or other deformation. And workers will welcome such novel ODD records and associated systems where overcoating appears so feasible.

The foregoing will confirm that "mild heating" (to well below melt T°) of such a bit site in such gold films produces definite reflectance changes ("transitions") without any pit formation.

This susceptibility of such thin absorber films of gold for recording bits (adequate change in reflectance, etc.) by such "mild heating" well below the melt point, holds great promise for improved recording systems. As workers will attest, any improvement that can significantly reduce write-energy requirements should, of itself, offer tremendous potential. For instance, the present state of the art is such that a mere 25%—50% reduction in required write-laser power could render systems cheap, reliable and practical, that are presently questionable—thus our invention could make a commercial system out of what is now a mere laboratory curiosity.

Workers will appreciate that one will also expect to be able to so use gold, and its compatible alloys, in other related circumstances (e.g., gold deposit on another kind of substrate where such "mild heating" at "bit sites" yields useful variance in reflectivity). In such cases, one will expect to formulate the gold (or an alloy thereof) to meet the operational requirements (e.g., as in Table I, sufficient gold, etc. in alloy to yield adequate archivability, sensitivity, etc.). Then, by whatever means one will expect to (experimentally or in theory) determine the write energy $E_w$ needed to achieve such "reflectance-switching" and relate this to the recording context (—i.e., to laser power and exposure time at $\lambda_o$, to thermal environment of absorber film, accounting for full-system in respect of optics, reflectance, heat losses to adjacent layers, etc.)—and "test-heating" of the contemplated record as in the above Examples can be undertaken to derive or confirm this.

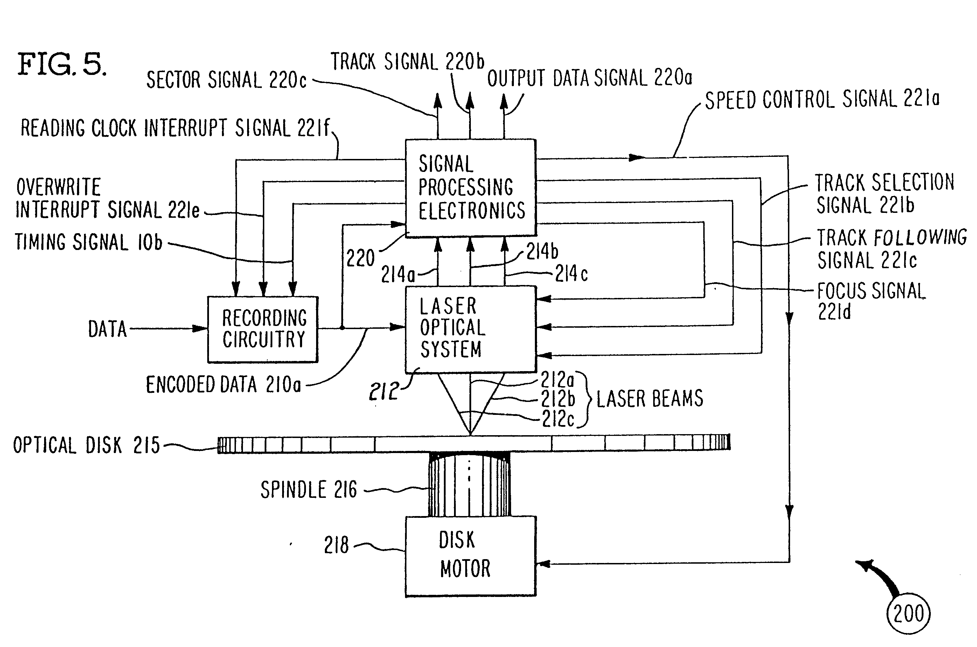

—Example VIII: preferred R/W ODD disk; Fig. 4

Fig. 4 depicts, in fragmentary idealized section, an improved ODD disk record R apt for use in "low power" R/W laser systems, e.g., of the type shown in Figs. 5—7 and described below. Record R comprises a substrate disk 112 on which is disposed a gold tri-layer 101 including a gold absorber film 115 atop an anti-reflective optical substrate comprised of dielectric spacer 114 on reflective layer 113. Those elements and the associated materials, operations, etc. may be understood as essentially the same as in Ex. I except as otherwise stated. Record R is capped with an overcoat 100-oc upon absorber 115. Further details are as follows.

Substrate disk 112 is preferably a well-known Winchester disk of the type presently used for magnetic recording records in computer systems (aluminum, 14" dia., usual polished surface). Preferably it is coated, at 112-S with a "subbing layer" adapted, as known in the art, to provide a smooth surface for deposition of reflector layer 113.

Alternatively, the disk itself may be made as a tuned (to $\lambda_o$) dielectric mirror.

As mentioned, reflector 113 (AL film as before) and spacer 114 preferably provide an anti-reflective base on which absorber film 115 is applied to complete the well-known "tri-layer". Spacer 114 is preferably comprised of transparent Teflon or like organic of "tri-layer thickness". Alternatively, $SiO_2$ or like "glass" may replace some of the organic, (e.g., center-portion), leaving organic (Teflon) above for good adhesion to gold, and as "thermal barrier" preventing reflector 113 from draining any appreciable energy from absorber 115 [stable under such heating].

Absorber layer 115 comprises pure gold vapor-deposited on the anti-reflective substrate 114, 113, etc. as before (to yield "first min. reflectance depth", etc.).

Overcoat 100-oc is next applied on absorber 115 to function, as known in the art, as a scratch-resistant "cap", a barrier to intrusion of contaminants (e.g., water, oxygen vapors) and to "defocus" dirt and grime thereon. That is, one may optically-eliminate (or at least reduce) the effects of surface dust, etc. (on 100-oc) by simply making it thick enough, albeit transparent to $\lambda_o$, to throw it out of focus when illuminating absorber 115 (e.g., here a few mils thick). Now, any dust particles settling on the overcoat surface are displaced far enough from the focal plane of the optical system as to have no appreciable effect on read/write operations.

Overcoat 100-oc may comprise a suitable-transparent glass. However, in certain cases, a barrier coating (e.g., 100 A° SiO and/or several hundred A° Teflon) is first coated upon absorber 115. In certain instance, where flexibility is critical, the glass may be replaced by a flexible organic (e.g., "RTV silastic" of General Electric Co.) and in such a case a "wear-cap" will often be advisable (e.g., acrylic layer on TRV or as in U.S. 4,101,907).

Now, workers will recognize that one will use such a record by rotating it (e.g., 1800 rpm preferably here) while using the Write Beam to write a selectable number of information tracks, each track comprising a succession of spaced "bit-sites" ("Transitions" written there, as reflectivity changes), separated by unwritten areas in which the reflectivity of the absorptive layer 115 is undisturbed.

For read-out a laser beam of relatively constant intensity and prescribed wavelength is likewise focused on the information track comprising these bits at the absorber layer as the disk is rotated. Thus a bit can represent a "one" where the write-beam has switched reflectivity along this track; otherwise a "zero" may be understood. The read laser will apply energy insufficient to so change spot reflectivity, and at a frequency at which the undisturbed regions of the track exhibit an "anti-reflective" condition, preferably. A photo detector is positioned to receive light reflected from the passing "bit sites" being used, as known to develop as output signal representing the so-recorded "bits". The reflectance changes need not be maximal, just sufficient to give the needed minimal read-out contrast (e.g., S/N ratio that can be tolerated in the contemplated playback mode).

Workers will appreciate how this teaches that one may use a thin film of gold as the absorber (information) means in a "low-radiation" record adapted for high-density digital data recording for data processing using low-power recording means, like a 10 mW laser, to "write" bits ("transitions") detected via reflectivity change. Evidently, other related absorber structures, related materials and related read/write systems will be applicable in certain instances. Below is an example of a preferred R/W system apt for using such a record.

—Associated low-power R/W system, Figs. 5, 6, 7:

An example and preferred mode of using such a recording medium will now be briefly described with reference to a preferred related optical recording/reproducing system 200 in Fig. 5.

Fig. 5 generally illustrates a system 200 wherein data to be recorded is first applied to recording circuitry 210 which encodes the applied data using, for example, a conventional encoding format of the type employed for magnetic recording, such as non-return-to-zero, return-to-zero, etc. Conventional error checking may also be provided for the encoded signal.

The encoded data 210a from the recording circuitry 210 is applied to a laser optical system 212. The laser optical system 212 generates three laser beams 212a, 212b, and 212c which are focused at spaced locations along the center line of the same selected track of a preformatted optical disk 215 supported on a precision spindle 216 for rotation by a motor 218. Optical disk 215 may, for example, be a tri-layer disk of the type disclosed in the aforementioned Example VII.

Laser beam 212a is a writing beam which is modulated by the encoded data so as to form optically detectable changes in a selected track of the optical disk 215 representative of the encoded data. It is to be understood that the optically detectable changes (e.g., "bits") produced in the disk by the write laser beam 212a need involve no physical deformation such as pits or holes. The only requirements is that optically detectable changes be produced in selected areas of the disk in response to the write laser beam 212a which are representative of the encoded data 210a. For the purpose of this description, all of the possible types of optically detectable changes that can be produced will hereinafter be referred to as "transitions".

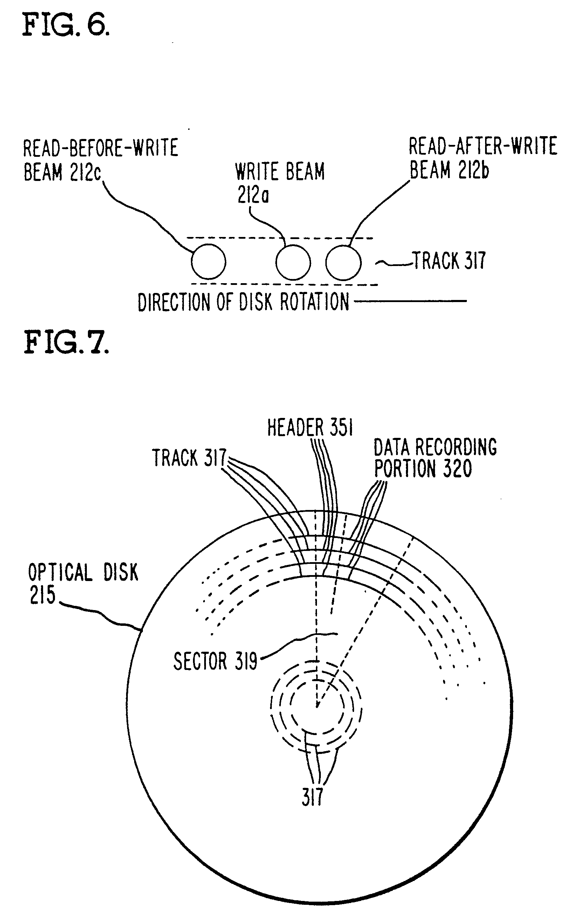

Laser beams 212b and 212c shown in Fig. 5 are reading beams. As typically illustrated in Fig. 6, the reading beam 212b is a read-after-write beam which is accordingly focused behind the writing beam 212a on the center line 217a of a selected track 217; while beam 212b is a read-before-write beam and is accordingly focused ahead of the writing beam 212a. The intensity of the read beams 212b and 212c are chosen so that they will not disturb the integrity of previously recorded information. The read beams are reflected from the disk 215 back to the optical system 212 which, in response thereto, derives a plurality of detection signals 214a, 214b and 214c which are applied to signal processing electronics 220. The signal processing electronics 220 also receives the encoded data signal 210a from the recording circuitry 210 for use in checking the accuracy of recorded data.

The signal processing electronics 220 uses the detected signals 214a, 214b and 214c to provide an output data signal 220a corresponding to data read from the optical disk 215, along with signals 220b and 220c respectively identifying the track and sector locations on the disk from which the data is read. The signal processing electronics 220 also produces control signals 210b, 221a, 221b, 221d, 221e and 221f. More specifically, control signal 210b is applied to the recording circuitry 210 for synchronizing the encoding of data with disk rotation; control signal 221a is applied to the optical disk motor 218 to provide accurate speed control during recording and reading; control signal 221b is applied to the laser optical system 212 for controlling the radial position of the laser beams 212a, 212b and 212c for the purpose of selecting a desired track; control signal 221c is applied to the laser optical system 212 for providing precise track following of the laser beams on the selected track; control signal 212d is applied to the laser optical system 212 for providing precise focusing of the laser beams 212a, 212b and 212c; and control signal 221e is applied to the recording circuitry 210 for interrupting recording if the reflected read-before-write beam indicates the possibility of an overwrite recording error because the track ahead contains previously recorded data; and signal 221g is applied to the recording circuitry 210 to interrupt recording if a recording error occurs.

Next to be considered is the manner in which preformatting is provided for the optical disk 215 in Fig. 5 in accordance with the invention. An example of a typical formatting arrangement is illustrated in Fig. 7.

As generally indicated in Fig. 7, the optical disk 215 in the preferred embodiment being described contains a large plurality of circumferentisl tracks 317. The disk 215 is also divided into a plurality of sectors 319. As indicated in Fig. 7, each track 317 within a sector 319 comprises a header 351 and a data recording portion 320. The data recording portion 320 is the portion into which data is written during recording and comprises the greater portion of the track length within each sector 319. The header 351 of a track 317 is encountered first in each sector 319 and is provided on the disk prior to recording. The provision of such headers 351 on a disk prior to data recording is typically referred to as "formatting" the disk, and the resulting disk is considered to be "preformatted".

Other details of system 200 will be understood by workers in the art representing "present good practice" (e.g., with regard to particulars of subsystems, devices, components, materials and related manufacture and operation). Examples of various known methods and approaches may be seen in the following references:

| Patent No. | Inventor(s) |
| --- | --- |
| 4,216,501 | Bell |
| 4,232,337 | Winslow, et al |
| 4,243,848 | Utsumi |
| 4,243,850 | Edwards |
| 4,253,019 | Opheij |
| 4,253,734 | Komurasaki |
| 4,268,745 | Okano |

and in:

R. A. Bartolini, et al., "Optical Disk Systems Emerge", IEEE Spectrum, August 1978, pp. 20—28.

G. C. Kenney, et al., "An Optical Disk Replaces 25 Mag Tapes", IEEE Spectrum, February 1979, pp. 33—38.

K. Bulthuis, et al., "Ten Billion Bits on a Disk", IEEE Spectrum, August 1979, pp. 26—33.

A. E. Bell, et al., "Antireflection Structures for Optical Recording", IEEE Journal of Quantum Electronics, Vol. QE-14 No. 7, July 1978, pp. 487—495.

—Conclusion:

Workers will appreciate how aptly such "transition-forming" records and related R/W systems are to provide novel, improved records for computer applications and the like. In particular it will be appreciated that such records can be used to improve the efficiency, power usage and the cost effectiveness of an ODD disk drive as mentioned-—something workers in the art will applaud. Workers will also appreciate that such records and R/W systems for other like applications in related environments. For instance with such records modified to operate in other (R/W) frequencies and/or for other related purposes (e.g., holographic recording).

**Claims**

1. A method for writing data bits onto an optical data storage medium (215) including use of a modulated write laser beam (212a) focused (by 212) onto a gold absorber layer (5 or 15 or 115) in said medium (215) to alter the optical reflectivity to light (212b or 212c) of a predetermined wavelength ($\lambda_o$) of said medium at selected positions (320) thereon whereat it is desired to write a data bit by provision of light from said write laser beam (212a) with a predetermined intensity and for a predetermined time at each of said positions (320) on said medium (215) whereat it is desired to write a data bit; said method being characterized by said predetermined intensity and said predetermined duration being selected for said beam, during writing of said each bit, never to melt said gold (5 or 15 or 115) but nevertheless to be operative to alter the reflectivity of said gold layer (5 or 15 or 115) at said each bit without interruption or deformation of said gold layer (5 or 15 or 115).

2. A method according to claim 1 including provision of said gold absorber layer (5 or 15 or 115) over a spacer layer (4 or 14 or 114) in a tri-layer structure (2, 3, 4, 5, or 12, 13, 14, 15 or 112, 113, 114, 115) on said medium (215), said temperature, reached by said gold layer 5 or 15 or 115) during said writing of said each pit, being insufficient to cause alteration to said spacer layer (4 or 14 or 114).

3. A method according to claim 1 or claim 2 including provision of a protective overcoat (100-OC) over said absorber layer (5 or 15 or 115).

4. A method according to claim 1 or claim 2 wherein said gold layer (5 or 15 or 115) includes an alloying addition of lead.

5. A method according to claim 4 including the step of laying down said gold layer (5 or 15 or 115) in alternately deposited layers of pure gold and pure lead.

6. A method according to claim 1 or claim 2 wherein said gold layer (5 or 15 or 115) includes an alloying addition of tin.

7. A method according to claim 6 including the step of laying down said gold layer (5 or 15 or 115) in alternately deposited layers of pure gold and pure tin.

8. A method according to any of claims 1 to 7 wherein said gold layer (5 or 15 or 115) is provided by vapour deposition.

9. A method according to claim 2, or according to any of claims 3 to 8 when dependent upon claim 2, wherein said tri-layer (2, 3, 4, 5 or 12, 13, 14, 15 or 112, 113, 114, 115) is a tuned dark mirror structure at said predetermined wavelength ($\lambda_o$) said method including the step of depositing said gold layer (5 or 15 or 115) onto said spacer layer (4 or 14 or 114) until overall reflectivity of said tri-layer (2, 3, 4, 5 or 12, 13, 14, 15 or 112, 113, 114, 115) first falls to a predetermined fraction, at or near zero, of the reflectivity of supd tri-layer (2, 3, 4, 5 or 12, 13, 14, 15 or 112, 113, 114, 115) before deposition of said gold layer (5 or 15 or 115).

10. A method according to claim 2, or according to any of claims 3 or 9, when dependent upon claim 2, wherein said spacer layer (4 or 14 or 114) is a silicon dioxide layer.

11. A method according to claim 10 wherein said predetermined intensity of said write laser beam (212a) lies in a range achieved using a laser power in the range 1 to 15 mW with focused diameter in the range 0.5 to 1.0 micrometers and wherein said predetermined time is in the range 10 nanoseconds to 100 nanoseconds.

12. A method according to claim 3 or according to any of claims 8, 9 or 10 when dependent upon claim 3, wherein said overcoat is a silicon dioxide overcoat.

13. A method according to claim 12 wherein said silicon dioxide overcoat is vapour deposited to a depth of 10 nm.

14. A method according to claim 2, wherein said spacer layer (4 or 14 or 114) is an elastomer layer.

15. A method according to claim 14 wherein said elastomer is polytetrafluoroethylene.

16. A method according to claim 14 or 15 wherein said predetermined intensity lies in a range achieved using a laser power in the range 1 mW to 10 mW with a focused diameter in the range 0.5 to 1.0 micrometers, and wherein said predetermined time lies in the range 10 nanoseconds to 100 nanoseconds.

17. A method according to claims 14 or 15 when dependent upon claim 3 wherein said overcoat (100-OC) is an elastomeric overcoat.

18. A method according to claim 17 wherein said elastomeric overcoat is a polytetrafluoroethylene overcoat.

19. A method according to claim 18 wherein said polytetrafluoroethylene (100-OC) is deposited to a depth of 0.2 micrometers.

20. A method according to Claim 18 or Claim 19, wherein said predetermined time is in excess of 30 seconds and wherein said predetermined intensity is delivered using a laser power of 0.1 mW focused to a diameter in the range of 0.5 micrometers to 1.0 micrometers.

21. A method according to any of the preceding claims including the use of a Helium-Neon laser to provide said write laser beam (212a).

22. A method according to any of the preceding claims wherein said write laser beam (212a) comprises a wavelength of 633 nm.

23. A method according to claim 2, or claim 9, 10 or 11 or any of claims 14 to 20, or according to any of claims 3 to 8 or 12 to 13 or claim 21 or claim 22 when dependent upon claim 2, wherein said optical data storage medium (215) is an optical data storage disk (215).

24. A method according to claim 23 wherein said selected positions (320) on said disk (215) whereon it is desired to write a data bit are provided in a plurality of concentric, circular tracks (317) on said disk (215).

25. A method according to claim 24 including rotation of said disk (215) about its centre with an angular velocity of 1,800 rpm.

26. A method according to any of the preceding claims wherein said gold layer (5 or 15 or 115) has a depth of 25 nm.

**Patentansprüche**

1. Verfahren zur Aufzeichnung von Datenbits auf ein optisches Datenspeichermedium (215), welches die Verwendung eines modulierten Laser-Schreibstrahls (212a) umfaßt, der (durch 212) auf eine Absorber-Goldschicht (5 oder 15 oder 115) im genannten Medium (215) fokussiert wird, um die optische Reflektivität gegenüber Licht (212b oder 212c) einer vorbestimmten Wellenlänge ($\lambda_o$) des Mediums in bestimmten Bereichen (320) zu verändern, in denen die Aufzeichnung eines Datenbits gewünscht wird, indem Licht mit einer vorbestimmten Intensität und über eine vorbestimmte Zeitdauer auf jeden der Bereiche (320) des Mediums (215) gestrahlt wird, in welchem ein Datenbit gespeichert werden soll, wobei das Verfahren dadurch gekennzeichnet ist, daß die vorbestimmte Intensität und vorbestimmte Zeitdauer für den Strahl während der Aufzeichnung jedes Bits so ausgewählt wird, daß das Gold (5 oder 15 oder 115) zu keinem Zeitpunkt geschmolzen wird, jedoch ausreichend ist, um die Reflektivität der Goldschicht (5 oder 15 oder 115) bei jedem Bit ohne Unterbrechung oder Verformung der Goldschicht (5 oder 15 oder 115) zu verändern.

2. Verfahren nach Anspruch 1, bei welchem die Absorber-Goldschicht (5 oder 15 oder 115) über eine Abstandsschicht (4 oder 14 oder 114) in einer Dreischichtenstruktur (2, 3, 4, 5 oder 12, 13, 14, 15 oder 112, 113, 114, 115) auf dem Medium (215) vorgesehen ist, wobei die von der Goldschicht (5 oder 15 oder 115) während der Aufzeichnung jeder Vertiefung erreichte Temperatur nicht ausreicht, um eine Veränderung der Abstandsschicht (4 oder 14 oder 114) zu bewirken.

3. Verfahren nach Anspruch 1 oder 2, bei welchem eine Schutz-Deckschicht (100-OC) über der Absorberschicht (5 oder 15 oder 115) vorgesehen wird.

4. Verfahren nach Anspruch 1 oder 2, wobei die Goldschicht (5 oder 15 oder 115) einen Legierungszusatz von Blei umfaßt.

5. Verfahren nach Anspruch 4, welches den Schritt umfaßt, die Goldschicht (5 oder 15 oder 115) in alternierend aufgetragenen Schichten von reinem Gold und reinem Blei aufzubringen.

6. Verfahren nach Anspruch 1 oder 2, worin die Goldschicht (5 oder 15 oder 115) einen Legierungszusatz von Zinn enthält.

7. Verfahren nach Anspruch 6, welches den Schritt umfaßt, die Goldschicht (5 oder 15 oder 115) in alternierend aufgetragenen Schichten von reinem Gold und reinem Zinn aufzubringen.

8. Verfahren nach einem der Ansprüche 1 bis 7, worin die Goldschicht (5 oder 15 oder 115) durch eine oder mehrere Aufdampf-Behandlungen vorgesehen wird.

9. Verfahren nach Anspruch 2 oder einem der Ansprüche 3 bis 8, soweit diese auf Anspruch 2 zurückbezogen sind, bei welchem die Dreischichtenstruktur (2, 3, 4, 5 oder 12, 13, 14, 15 oder 112, 113, 114, 115) eine abgestimmte Dunkelspiegel-Struktur bei der vorbestimmten Wellenlänge ($\lambda_o$) ist, wobei das Verfahren den Schritt umfaßt. die Goldschicht (5 oder 15 oder 115) auf die Abstandsschicht (4 oder 14 oder 114) aufzutragen, bis die Gesamtreflektivität der Dreischichtenstruktur (2, 3, 4, 5 oder 12, 13, 14, 15 oder 112, 113, 114, 115) zuerst auf einen vorbestimmten Bruchteil bei oder nahe bei Null der Reflektivität der Dreischichtenstruktur (2, 3, 4, 5 oder 12, 13, 14, 15 oder 112, 113, 114, 115) vor der Auftragung der Goldschicht (5 oder 15 oder 115) abfällt.

10. Verfahren nach Anspruch 2 oder nach einem der Ansprüche 3 bis 9, soweit auf Anspruch 2 zurückbezogen, wobei die Anstandsschicht (4 oder 14 oder 114) eine Siliziumdioxidschicht ist.

11. Verfahren nach Anspruch 10, bei dem die vorbestimmten Intensität des Laser-Schreibstrahles (212a) in einem Bereich liegt, der durch Verwendung einer Laserenergie im Bereich 1 bis 15 mW bei einem fokussierten Durchmesser im Bereich 0,5 bis 1,0 Mikrometer erhalten wird und worin die vorbestimmte Zeitdauer im Bereich 10 Nanosekunden bis 100 Nanosekunden liegt.

12. Verfahren nach Anspruch 3 oder einem der Ansprüche 8, 9 oder 10, soweit auf Anspruch 3 zurückbezogen, worin die Schutzschicht eine Siliziumdioxid-Schutzschicht ist.

13. Verfahren nach Anspruch 12, worin die Siliziumdioxid-Schutzschicht bis zu einer Dicke von 10 Nanometern durch Dampfabscheidung aufgetragen wird.

14. Verfahren nach Anspruch 2, worin die Abstgandsschicht (4 oder 14 oder 114) eine Elastomeren-Schicht ist.

15. Verfahren nach Anspruch 14, worin das Elastomer Polytetrafluoroethylen ist.

16. Verfahren nach Anspruch 14 oder 15, worin die vorbestimmte Intensität in einem Bereich liegt, der durch Verwendung einer Laserenergie im Bereich von 1 mW bis 10 mW mit einem fokussierten Durchmesser im Bereich 0,5 bis 1,0 Mikrometer erhalten wird und worin die vorbestimmte Zeitdauer im Bereich von 10 Nanosekunden bis 100 Nanosekunden liegt.

17. Verfahren nach Anspruch 14 oder 15, soweit zurückbezogen auf Anspruch 3, worin die Schutzschicht (100-OC) eine Elastomeren-Schutzschicht ist.

18. Verfahren nach Anspruch 17, worin die Elastomeren-Schutzschicht eine Polytetrafluoroethylen-Schutzschicht ist.

19. Verfahren nach Anspruch 18, worin das Polytetrafluoroethylen (100-OC) bis zu einer Dicke von 0,2 Mikrometer aufgetragen wird.

20. Verfahren nach einem der Ansprüche 18 oder 19, worin die vorbestimmte Zeitdauer größer ist als 30 Sekunden und worin die vorbestimmte Intensität abgegeben wird, indem eine Laserenergie von 0,1 mW verwendet wird, die auf einen Durchmesser im Bereich zwischen 0,5 Mikrometer und 1,0 Mikrometer fokussiert ist.

21. Verfahren nach einem der vorstehenden Ansprüche, welches die Verwendung eines Helium-Neonlasers zur Erzeugung des Laser-Schreibstrahles (212a) umfaßt.

22. Verfahren nach einem der vorstehenden Ansprüche, bei dem der Laser-Schreibstrahl (212a) eine Wellenlänge von 633 Nanometern aufweist.

23. Verfahren nach Anspruch 2 oder 9, 10 oder 11 oder einem der Ansprüche 14 bis 20 oder nach einem der Ansprüche 3 bis 8, 12, 13, 21 oder 22, soweit zurückbezogen auf Anspruch 2, worin das optische Datenspeichermedium (215) eine optische Datenspeicherplatte (215) ist.

24. Verfahren nach Anspruch 23, worin die ausgewählten Bereiche (320) auf der Platte (215), in welchen ein Datenbit aufgezeichnet werden soll, in einer Mehrzahl von konzentrischen kreisförmigen Bahnen (317) auf der Platte (215) vorgesehen sind.

25. Verfahren nach Anspruch 24, welches die Drehung der Platte (215) um ihren Mittelpunkt mit einer Winkelgeschwindigkeit von 1800 rpm umfaßt.

26. Verfahren nach einem der vorstehenden Ansprüche, worin die Goldschicht (5 oder 15 oder 115) eine Dicke von 25 Nanometern aufweist.

## Revendications

1. Procédé d'inscription de bits de données sur un support de stockage optique de données (215) selon lequel on module le faisceau-laser d'écriture (212a) focalisé (par 212) sur une couche absorbante en or (5, 15 ou 115) dans ce support (215) pour modifier la réflectivité optique à la lumière (212b ou 212c) ayant une longueur d'onde prédéterminée ($\lambda_o$) pour le support dans des positions choisies (320) sur celui-ci, pour inscrire un bit de données à l'aide de la lumière du faisceau-laser d'écriture (212) ayant une intensité déterminée et une durée déterminée pour chacune des positions (320) dans le milieu (215) dans lequel on souhaite écrire un bit de données; ce procédé étant caractérisé en ce que l'intensité prédéterminée et la durée prédéterminée sont choisies pour le faisceau pendant l'écriture de chaque bit pour ne jamais faire fondre l'or (5, 15, 115) mais pour néanmoins modifier la réflectivité de la couche d'or (5, 15, 115) de chaque bit sans interruption, ni déformation de la couche d'or (5, 15, 115).

2. Procédé selon la revendication 1, caractérisé en ce qu'on réalise la couche absorbante en or (5, 15, 115) sur une couche d'écartément (4, 14 ou 114) dans une structure à triple couche (2, 3, 4, 5 ou 12, 13, 14, 15 ou 112, 113, 114, 115) sur le milieu (215), la température à laquelle arrive la couche d'or (5, 15 115) au cours de l'écriture de chaque bit n'étant pas suffisante pour modifier la couche d'écartement (4, 14, 114).

3. Procédé selon la revendication 1 ou la revendication 2, caractérisé en ce qu'on réalise un revêtement protecteur (100-cc) sur la couche absorbante (5, 15, 115).

4. Procédé selon la revendication 1 ou la revendication 2, caractérisé en ce que la couche d'or (5, 15, 115) contient une addition de plomb constituant un alliage.

5. Procédé selon la revendication 4, caractérisé en ce qu'on réalise la couche d'or (5, 15, 115) en déposant alternativement des couches d'or pur et des couches de plomb pur.

6. Procédé selon la revendication 1 ou la revendication 2 caractérisé en ce que la couche d'or (5, 15, 115) comporte un ajout d'étain d'alliage.

7. Procédé selon la revendication 6, caractérisé en ce qu'on dépose la couche d'or (5, 15, 115) suivant des couches déposées alternativement d'or or pur et d'étain pur.

8. Procédé selon l'une quelconque des revendications 1 à 7, caractérisé en ce que la couche d'or (5, 15, 115) est obtenu par dépôt de vapeur.

9. Procédé selon la revendication 2 ou selon l'une quelconque des revendications 3 à 8, en liaison avec la revendication 2, caractérisé en ce que la triple couche (2, 3, 4, 5 ou 12, 13, 14, 15 ou 112, 113, 114, 115) est une structure de miroir noir accordée sur la longueur d'onde prédéterminée ($\lambda_o$), le procédé comprenant l'étape de dépôt de la couche d'or (5, 15, 115) de la couche d'écartement (4, 14, 114) jusqu'à ce que la réflectivité d'ensemble de la triple couche (2, 3, 4, 5 ou 12, 13, 14, 15 ou 112, 113, 114, 115) arrive d'abord à une fraction prédéterminée proche ou égale à zéro pour la réflectivité de la triple couche (2, 3, 4, 5, 14, 15 ou 112, 113, 114, 115) avant le dépôt de la couche d'or (5, 15, 115).

10. Procédé selon la revendication 2 ou selon l'une quelconque des revendications 3 ou 9 prises en liaison avec la revendication 2, caractérisé en ce que la couche d'écartement (4, 14, 114) est une couche de dioxyde de silicium.

11. Procédé selon la revendication 10, caractérisé en ce que l'intensité prédéterminée du faisceau-laser d'écriture (212a) est dans une plage obtenue en utilisant une puissance laser comprise entre 1 et 15 mW avec un diamètre de focalisation de l'ordre de 0,5 à 1,0 micromètre et la durée prédéterminée est de l'ordre de 10 nanosecondes à 100 nanosecondes.

12. Procédé selon la revendication 3 ou selon l'une quelconque des revendications 8, 9 ou 10 prises en liason avec la revendication 3, caractérisé en ce que le revêtement est une revêtement de dioxyde de silicium.

13. Procédé selon la revendication 12, caractérisé en ce que le revêtement de dioxyde de silicium est déposé à la vapeur sur une épaisseur de 10 nm.

14. Procédé selon la revendication 2, caractérisé en ce que la couche d'écartement (4, 14 ou 114) est une couche d'élastomère.

15. Procédé selon la revendication 14, caractérisé en ce que l'élastomère est du polytétrafluoroéthylène.

16. Procédé selon la revendication 14 ou la revendication 15, caractérisé en ce que l'intensité prédéterminée est située dans une plage obtenue est utilisant un laser dont la puissance est comprise entre 1 mW et 10 mW avec un diamètre de focalisation de l'ordre de 0,5 à 1,0 micromètre et la durée prédéterminée est comprise entre 10 nanosecondes et 100 nanosecondes.

17. Procédé selon les revendications 14 ou 15 en liaison avec la revendication 3, caractérisé en ce que le revêtement (100-oc) est un revêtement d'élastomère.

18. Procédé selon la revendication 17, caractérisé en ce que le revêtement d'élastomère est un revêtement de polytétrafluoroéthylène.

19. Procédé selon la revendication 18, caractérisé en ce que le polytétrafluoroéthylène (100-oc) est déposé sur une profondeur de 0,2 micromètre.

20. Procédé selon l'une quelconque des revendications 18, 19, caractérisé en ce que la durée prédéterminée est supérieure à 30 secondes et l'intensité prédéterminée est obtenue en utilisant une puissance laser de 0,1 mW focalisée à un diamètre comprise entre 0,5 micromètre et 1,0 micromètre.

21. Procédé selon l'une quelconque des revendications précédentes, caractérisé en ce qu'on utilise un laser hélium-néon pour le faisceau laser d'écriture (212a).

22. Procédé selon l'une quelconque des revendications précédentes, caractérisé en ce que le faisceau laser d'écriture (212a) a une longueur d'onde de 633 nm.

23. Procédé selon la revendication 2 ou les revendications 9, 10 et 11 ou l'une quelconque des revendications 14 à 20 ou encore l'une quelconque des revendications 3 à 8 ou 12, 13 ou 21 ou 22 en liaison avec la revendication 2, caractérisé en ce que le milieu de stockage de données (215) est un disque de stockage optique de données (215).

24. Procédé selon la revendication 23, caractérisé en ce que les positions choisies (320) sur le disque (215) sur lequel on veut inscrire des bits de données sont réparties suivant un ensemble de piste circulaires concentriques (317) du disque (215).

25. Procédé selon la revendication 24, caractérisé en ce qu'on fait tourner le disque (215) autour de son centre suivant une vitesse angulaire de 1800 tours par minute.

26. Procédé selon l'une quelconque des revendications précédentes, caractérisé en ce que la couche d'or (5, 15, 115) a une épaisseur de 25 nm.

FIG.1.

FIG.2.

FIG.4.

**FIG.3.** Reflectivity of Gold Tri-layer as a Function of Temperature.

# FIG. 5.

SECTOR SIGNAL 220c
TRACK SIGNAL 220b
OUTPUT DATA SIGNAL 220a
SPEED CONTROL SIGNAL 221a
READING CLOCK INTERRUPT SIGNAL 221f
OVERWRITE INTERRUPT SIGNAL 221e
TIMING SIGNAL 10b
TRACK SELECTION SIGNAL 221b
TRACK *FOLLOWING* SIGNAL 221c
FOCUS SIGNAL 221d

SIGNAL PROCESSING ELECTRONICS
220
214a 214b 214c

RECORDING CIRCUITRY
DATA
ENCODED DATA 210a

LASER OPTICAL SYSTEM
212
212a 212b 212c } LASER BEAMS

OPTICAL DISK 215
SPINDLE 216
218
DISK MOTOR

(200)

0 079 231

3

# FIG. 6.

READ-BEFORE-WRITE
BEAM 212c

WRITE BEAM
212a

READ-AFTER-WRITE
BEAM 212b

TRACK 317

DIRECTION OF DISK ROTATION

# FIG. 7.

HEADER 351

TRACK 317

DATA RECORDING
PORTION 320

OPTICAL DISK
215

SECTOR 319

317